# EUROPÄISCHE PATENTSCHRIFT

(11) **EP 4 189 500 B1**
(45) Veröffentlichungstag und Bekanntmachung des Hinweises auf die Patenterteilung: **07.05.2025**
(21) Anmeldenummer: 21746018.7
(22) Anmeldetag: 16.07.2021
(51) Int. Cl.: G05B 19/042, G05B 19/409

(54) **VERFAHREN ZUM ERWEITERN DER BEDIENFUNKTIONALITÄT EINES FELDGERÄTS DER AUTOMATISIERUNGSTECHNIK VON EINEM BEDIENGERÄT AUF ZUMINDEST EIN WEITERES BEDIENGERÄT**
METHOD FOR EXTENDING THE OPERATING FUNCTIONALITY OF A FIELD DEVICE IN THE FIELD OF AUTOMATION TECHNOLOGY FROM ONE OPERATING DEVICE TO AT LEAST ONE OTHER OPERATING DEVICE
PROCÉDÉ POUR PROLONGER LA FONCTIONNALITÉ DE FONCTIONNEMENT D'UN APPAREIL DE TERRAIN DANS LE DOMAINE DE LA TECHNOLOGIE D'AUTOMATISATION D'UN DISPOSITIF D'EXPLOITATION À AU MOINS UN AUTRE DISPOSITIF D'EXPLOITATION

(30) Priorität: 31.07.2020 DE 102020120297
(43) Veröffentlichungstag der Anmeldung: 07.06.2023
(73) Patentinhaber: Endress+Hauser Process Solutions AG, 4153 Reinach (CH)
(72) Erfinder: ROSER, Carmen, 79585 Steinen (DE); BINCZYK, Ronja, 79618 Rheinfelden (DE); THOREN, Werner, 79585 Steinen (DE); CORNELSEN, Norbert, verstorben (DE)
(74) Vertreter: Endress + Hauser Group Services (Deutschland) AG+Co. KG
(86) Internationale Anmeldenummer: PCT/EP2021/070014
(87) Internationale Veröffentlichungsnummer: WO 2022/023084

(56) Entgegenhaltungen:
- CN-U- 209 911 926
- DE-A1- 102014 103 426
- DE-A1- 102017 220 438
- DE-A1- 102018 132 921

## Beschreibung

Die Erfindung betrifft ein Verfahren zum Erweitern der Bedienfunktionalität eines Feldgeräts der Automatisierungstechnik von einem Bediengerät auf zumindest ein weiteres Bediengerät.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Die Bedienung eines Feldgeräts kann über geeignete Bediengeräte oder über das Leitsystem über den Feldbus erfolgen. Moderne Feldgeräten weisen zusätzlich eine Funkschnittstelle auf, über welche die Feldgeräte mittels mobiler Endgeräte (Smartphones, Tablets, etc.) oder über Wearables wie Datenbrillen bedient werden können, beispielsweise über das Drahtlosprotokoll Bluetooth LE oder über WiFi. Hierfür ist auf den mobilen Endgeräten, bzw. auf den Wearables eine App installiert, mittels welcher ein Benutzer die Bedienung vornehmen kann. Eine solche App wird von der Anmelderin unter dem Namen "SmartBlue" herausgegeben.

Mittels der App werden auf den mobilen Endgeräten Anzeigeelemente dargestellt. Solche Anzeigeelemente sind bspw. Bedienflächen, Menüstrukturen oder Schaltflächen, über welche Bedieneingaben getätigt werden können, oder Graphen, welche Daten der Feldgeräten, beispielsweise Messwerte oder Statusinformationen, visualisieren. Durch die baubedingte Größe der Displays solcher mobilen Endgeräte, insbesondere, wenn es sich um Smartphones handelt, können mitunter nicht alle für den Benutzer relevanten Anzeigeelemente visualisiert werden, so dass dieser gegebenenfalls über mehrere Bildschirmoberflächen scrollen muss oder Anzeigeelemente ständig neu anordnen muss. Die Verwendung eines größeren Geräts, beispielsweise eines Tablets mit einem großen Display, ist aufgrund der Größe und des Gewichts nicht in allen Anwendungen praktikabel.

Bekannt ist auch die Bedienung eines Feldgeräts mit Hilfe einer Datenbrille, bei der die Anzeigeelemente in das Sichtfeld eingeblendet werden und die Ausführung von Bedienfunktionen, also beispielsweise die Steuerung über Gesten, im Sichtfeld erfolgt.

Nachteil ist hier die richtige Positionierung der Geste sowie die Auswahl z.B. unter schwierigen Lichtbedingungen in der Anlage bzw. Position des Nutzers.

Das Dokument DE 10 2014 103426 A1 offenbart ein Verfahren nach dem Oberbegriff des Anspruchs 1.

Der Erfindung liegt die Aufgabe zugrunde, ein Verfahren vorzustellen, welches eine einfache und zuverlässige Bedienung für Feldgeräte mittels Bediengeräten mit limitierten Displaygrößen und/oder unter schwierigen Umgebungsbedingungen erlaubt.

Die Aufgabe wird durch ein Verfahren nach Anspruch 1 gelöst.

Der Vorteil des erfindungsgemäßen Verfahrens besteht darin, dass ein Teil der Anzeigeelemente und/oder der Bedienfunktionen, welche das Bedienprogramm zur Verfügung stellt, an ein weiteres Bediengerät, welches das Bedienprogramm ebenfalls ausführt, übergeben, bzw. übertragen werden kann. Mit anderen Worten können also zwei Bediengeräte verwenden werden, welche jeweils einen Teil der Anzeigeelemente darstellen, bzw. mit welchen jeweils ein Teil der Bedienfunktionen ausgeführt werden kann.

Hierfür koppelt sich ein weiteres Bediengerät mittels einer drahtlosen Kommunikationsverbindung an das Bediengerät. Die Anzeigeelemente, bzw. die Bedienfunktionen werden je Typ des erkannten zu koppelnden weiteren Bediengeräts an dieses übertragen. Das bedeutet, dass der Bediensoftware bekannt ist, welche und wie viele Anzeigeelemente an das weitere Bediengerät zu Anzeige auf diesem übermittelt werden können und sollen, bzw. welche Bedienfunktionalitäten das weitere Gerät überhaupt ausführen kann. Sind mehrere Anzeigeelemente zur Übermittlung vorhanden, als das weitere Bediengerät anzeigen kann, so kann dem Benutzer eine Liste aller zur Übertragung zur Verfügung stehenden Anzeigeelemente zur Auswahl präsentiert werden.

Der Begriff "Bedienen" ist hierbei breit auszulegen. Bedienen umfasst ein Parametrieren eines Feldgeräts, Einstellen von Messmodi des Feldgeräts, aber auch Manövieren durch Menüs, sowie Auswählen anzuzeigender Daten des Feldgeräts, bspw. Messwerte oder Status-/Diagnoseinformationen.

Feldgeräte, welche im Zusammenhang mit dem erfindungsgemäßen Verfahren genannt werden, sind bereits im einleitenden Teil der Beschreibung beispielhaft aufgeführt worden.

Gemäß einer vorteilhaften Ausgestaltung des erfindungsgemäßen Verfahrens ist vorgesehen, dass für die drahtlose Kommunikationsverbindung zwischen dem Bediengerät und dem Feldgerät und/oder zwischen dem Bediengerät und dem weiteren Bediengerät und/oder für den Suchlauf ein Bluetooth LE-Protokoll oder ein WiFi-Protokoll verwendet wird. Es können jedoch auch weitere geeignete Drahtlosprotokolle verwendet werden.

Gemäß einer vorteilhaften Ausgestaltung des erfindungsgemäßsen Verfahrens ist vorgesehen, dass in dem Falle, dass zwei oder mehr weitere Bediengeräte, welche dem Bediengerät bekannt sind, gefunden wurden, der Benutzer eine Auswahl über ein oder mehrere für die anschließenden Verfahrensschritte zu verwendenden weiteren Bediengeräte mittels des Bediengeräts getroffen wird. Der Benutzer kann je nach Zweck mehrere Geräte mit sich führen. Das Bedienprogramm stellt nach dem Suchlauf eine Liste dar, welche die gefundenen und kompatiblen Bediengeräte zur Auswahl anzeigt. Es kann auch vorgesehen sein, dass das Bediengerät Anzeigeelemente und/oder Bedienfunktionalitäten an zwei oder mehrere geeignete weitere Bediengeräte übermittelt. Es kann hierfür vorgesehen sein, dass jedem der weiteren Bediengeräte eigene Anzeigeelemente, bzw. Bedienfunktionen übermittelt werden, so dass ein Anzeigeelement, bzw. eine Bedienfunktion nach der Übermittlung nicht auf mehreren Bediengeräten vorhanden ist.

Gemäß des erfindungsgemäßen Verfahrens ist vorgesehen, dass in dem Falle, dass zumindest ein dem Bediengerät nicht bekanntes weiteres Bediengerät, gefunden wird, von dem Bediengerät eine Eignungsprüfung des weiteren Bediengeräts durchgeführt wird. Bei der Eignungsprüfung wird der Typ des weiteren Bediengeräts festgestellt, sowie das auf dem weiteren Bediengerät ablaufende Bedienprogramm. Sind diese beiden Faktoren zu dem Bediengerät, bzw. zu dem Bedienprogramm kompatibel, so wird geprüft, welche der Anzeigeelemente, bzw. der Bedienfunktionen auf das weitere Bediengerät übertragen werden können. Hierfür wird beispielsweise von dem Bediengerät aus eine online-Abfrage an eine Datenbank des Herstellers des Bedienprogramms übersendet und die Ergebnisse eingeholt. Alternativ wird das Bedienprogramm des weiteren Bediengeräts nach diesen Informationen abgefragt. Das Ergebnis der Abfrage wird in beiden Fällen gemeinsam mit dem Namen des weiteren Bediengeräts auf dem Bedienprogramm des Bediengeräts gespeichert. Anschließend steht das weitere Bediengerät für das erfindungsgemäße Verfahren zur Verfügung. Es kann vorgesehen sein, im Falle, dass das weitere Bediengerät lediglich für die Anzeige von Anzeigeelementen vorgesehen ist, dass kein Bedienprogramm oder lediglich ein Bedienprogramm mit reduziertem Umfang vorhanden sein muss.

Gemäß einer vorteilhaften ersten Variante des erfindungsgemäßen Verfahrens ist vorgesehen, dass als Bediengerät und als weiteres Bediengerät jeweils ein mobiles Endgerät verwendet werden, wobei das Bediengerät und das weitere Bediengerät jeweils einen Touchscreen aufweisen.

Gemäß einer vorteilhaften Ausgestaltung der ersten Variante des erfindungsgemäßen Verfahrens ist vorgesehen, dass mittels des Touchscreens des ersten Bediengeräts ein oder mehrere Anzeigeelemente visualisiert werden, wobei mittels des Touchscreens des weiteren Bediengeräts ein oder mehrere übergebene Anzeigeelemente, insbesondere Messwertverläufe des Feldgeräts, Menüelemente, und/oder Schaltflächen, visualisiert werden. Auf diese Art und Weise kann die Bildschirmfläche, welche zur Anzeige der Anzeigeelemente verwendet wird, vergrößert, bzw. erweitert werden.

Gemäß einer vorteilhaften Ausgestaltung der ersten Variante des erfindungsgemäßen Verfahrens ist vorgesehen, dass mittels des Touchscreens des weiteren Bediengeräts ein oder mehrere übergebene Bedienfunktionen, insbesondere das Auswählen von auf dem Touchscreen visualisierten Menüelementen und/oder Schaltflächen, ausgeführt werden. Es können somit nicht nur Schaltflächen oder Menüelemente auf dem weiteren Bediengerät angezeigt werden, sondern können diese Schaltfläche oder Menüelemente auch bedient werden. Hierfür benötigt das weitere Bediengerät keine eigene Kommunikationsverbindung mit dem Feldgerät. Die Bedienung erfolgt über das Bediengerät, welches die Bedienbefehle des weiteren Bediengeräts empfängt und an das Feldgerät weiterleitet.

Gemäß einer vorteilhaften zweiten Variante des erfindungsgemäßen Verfahrens ist vorgesehen, dass als Bediengerät eine Datenbrille verwendet wird und wobei als weiteres Bediengerät ein mechanisches Eingabeelement, insbesondere mit zumindest einem Beschleunigungssensor, bspw. ein Datenhandschuh, ein Gamepad oder ein berührungs-/bewegungssensitives Kleidungsstück, verwendet wird. Als Datenbrille können jegliche geeignete VR("Virtual Reality")-, bspw. die Oculus "Rift" oder AR("Augmented Reality")/MR("Mixed Reality")-Datenbrillen, bspw. die Microsoft "Hololens" oder Google "Glass" verwendet werden. Auch Datenhelme fallen unter diesen Begriff. Der Datenhandschuh ist ein Eingabegerät in Form eines Handschuhs mit mehreren Lagesensoren, bspw. ausgestaltet zur Gestensteuerung, und einer Vielzahl von Bedienelementen, z.B. Bedienelemente in den Fingern, welche durch eine Fingerbewegung betätigt werden. Ein Gamepad weist eine Vielzahl von Bedienelementen in Form von Tasten und Joysticks und eine Vielzahl von Beschleunigungssensoren auf.

Gemäß einer vorteilhaften Ausgestaltung der zweiten Variante des erfindungsgemäßen Verfahrens ist vorgesehen, dass mittels der Datenbrille ein oder mehrere Anzeigeelemente visualisiert werden und wobei mittels des Datenhandschuhs zumindest eine übergebene Bedienfunktion ausgeführt wird. Da eine Datenbrille je nach Typ nur eine begrenzte Bedienbarkeit ermöglicht, werden die Bedienfunktionen auf den Datenhandschuh ausgelagert.

Gemäß einer vorteilhaften Ausgestaltung der zweiten Variante des erfindungsgemäßen Verfahrens ist vorgesehen, dass als übergebene Bedienfunktion eine Navigation durch auf der Datenbrille visualisierte Anzeigeelemente verwendet wird. Die Navigation erfolgt beispielsweise durch eine Gestensteuerung mittels des Datenhandschuhs.

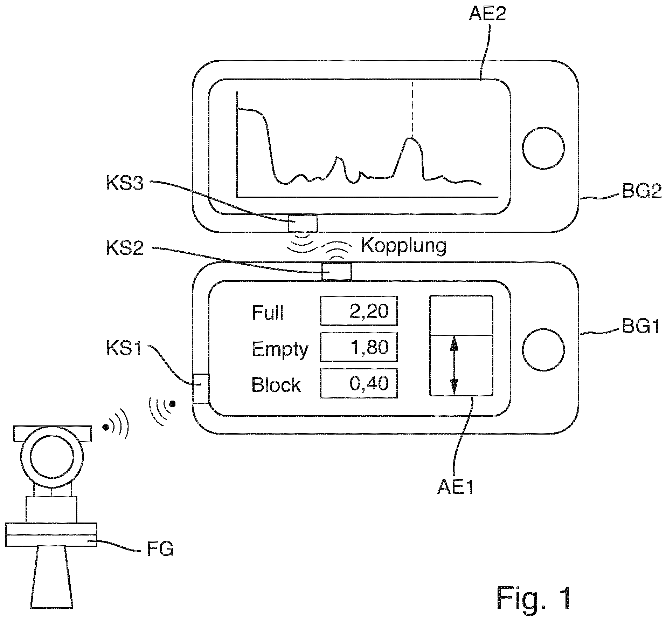

Die Erfindung wird anhand der nachfolgenden Figuren näher erläutert. Es zeigen
Fig. 1: ein Ausführungsbeispiel des erfindungsgemäßen Verfahrens; und
Fig. 2: ein zweites Ausführungsbeispiel des erfindungsgemäßen Verfahrens.

In beiden Ausführungsbeispielen wird ein Feldgerät FG bedient. Im vorliegenden Fall handelt es sich bei diesem um ein Füllstandsmessgerät, welche beispielsweise per Radartechnologie den Füllstand eines Messmediums in einem Behälter, beispielsweise in einem Tank oder in einem Silo, bestimmt. Es kann sich jedoch alternativ auch um ein Feldgerät beliebigen Typs handeln. Beispiele hierfür sind im einleitenden Teil der Beschreibung aufgeführt.

Die Bedienung erfolgt in beiden Ausführungsbeispielen über ein Bediengerät BG1. Dieses weist eine erste Kommunikationsschnittstelle KS1 auf, über welche das Bediengerät BG1 eine Kommunikationsverbindung mit dem Feldgerät FG aufbaut, insbesondere über Bluetooth LE. Auf dem Bediengerät BG1 ist ein Bedienprogramm ausgeführt, über welches ein Benutzer BE das Feldgerät bedienen kann.

Im ersten Ausführungsbeispiel handelt es sich bei dem Bediengerät BG2 um ein mobiles Endgerät, vorliegend ein Smartphone. Bei dem Bedienprogramm handelt es sich um eine App, beispielsweise um die von der Anmelderin herausgegebene App "SmartBlue". Mittels dieser App kann das Feldgerät FG nach hergestellter Kommunikationsverbindung bedient werden. Hierfür werden auf der Bedienoberfläche Anzeigeelemente AE1 visualisiert, außerdem werden Bedienfunktionen BE in Form von Schaltflächen dargestellt. Durch Eingabe von Parameterwerten in die Schaltflächen lösen sie Bedienfunktionen BE eine Parameteränderung im Feldgerät FG aus. Des Weiteren wird die mit dem Parameterwert verbundene Visualisierung als Anzeigelement AE1 angezeigt, bspw. für den Parameter "Full" ein Maximalwert des Füllstands in dem Behälter, bzw. für "Empty" ein Minmalwert des Füllstands, sowie für "Block" eine Blockdistanz, ab welcher eine Hüllkurve aufgenommen wird.

Da das Bediengerät BG1 nur ein kleines Display hat, müssen die Schaltflächen und die Anzeigeelemente AE1 zur Anzeige weiterer Bedienfunktionen und Anzeigeelement ständig verschoben werden. Zur Erhöhung des Bedienkomforts startet das Bediengerät BG1 einen Suchlauf über eine zweite Kommunikationsschnittstelle, insbesonder ebenfalls über Bluetooth LE, nach weiteren Bediengeräten. Während des Suchlaufs wird das Bediengerät BG2, ebenfalls ein mobiles Endgerät, beispielsweise ein Tablet oder ein weiteres Smartphone gefunden. Da das weitere Bediengerät BG2 dem Bedienprogramm des Bediengeräts BG1 bereits bekannt ist, koppelt sich dieses über seine Kommunikationsschnittstelle KS3 automatisch an das Bediengerät BG1.

Anschließend wird das Anzeigeelement AE2 auf das weitere Bediengerät BG2 übertragen und dort visualisiert. Es handelt sich hierfür um eine von dem Feldgerät FG erfasste Hüllkurve, die sich während der Parametrierung mittels des ersten Bediengeräts BG1 ändert.

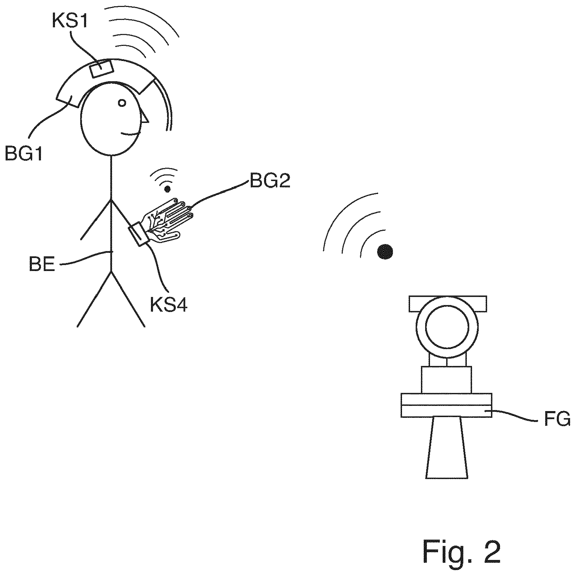

In Fig. 2 ist ein zweites Ausführungsbeispiel gezeigt. Bei dem Bediengerät BG1 handelt es sich um eine Datenbrille, beispielsweise um die Microsoft "HoloLens". Diese visualisiert Anzeigeelemente, beispielsweise Menüs oder Schaltflächen. Zum Bedienen des Feldgeräts koppelt das Bediengerät BG1 an einen Datenhandschuh, welcher das weitere Bediengerät BG2 darstellt. Nach dem Koppeln werden dem Datenhandschuh Bedienfunktionalitäten übergeben, welche ein Bedienen des Feldgeräts ermöglichen, beispielsweise das Auswählen von Einträgen in den in der Datenbrille visualisierten Menüs durch Gestensteuerung mittels des Datenhandschuhs. Alternativ zum Datenhandschuh kann ein Gamepad oder ein berührungs-/bewegungssensitives Kleidungsstück, bspw. ein Stoffhandschuh mit Näherungssensoren und/oder Lagesensoren, verwendet werden.

Für beide Ausführungsbeispiele gilt, dass auch mehrere weitere Bediengeräte mit dem Bediengerät BG1 gekoppelt werden können, so dass Anzeigelemente AE1, AE2 und/oder Bedienfunktionen auf mehrere weitere Bediengeräte übertragen werden. In dem Falle, dass ein weiteres Bediengerät gefunden wird, welches dem Bediengerät BG1 nicht bekannt ist, wird eine Eignungsprüfung durchgeführt. Nach erfolgreicher Eignungsprüfung werden die Identifikationsinformationen des weiteren Bediengeräts in dem Bedienprogramm des Bediengeräts BG1 gespeichert.

### Bezugszeichenliste

- AE1, AE2: Anzeigeelemente
- BE: Benutzer
- BF: Bedienfunktion
- BG1: Bediengerät
- BG2: weiteres Bediengerät
- FG: Feldgerät
- KS1, KS2, KS3, KS4: Kommunikationsschnittstellen

## Patentansprüche

1. Verfahren zum Erweitern der Bedienfunktionalität eines Feldgeräts (FG) der Automatisierungstechnik von einem Bediengerät (BG1) auf zumindest ein weiteres Bediengerät (BG2), umfassend
- Aufbauen einer drahtlosen Kommunikationsverbindung zwischen dem Bediengerät (BG1) und dem Feldgerät (FG) über eine erste Kommunikationsschnittstelle (KS1) des Bediengeräts (BG1), wobei das Bediengerät (BG1) zumindest ein Bedienprogramm mit einer Vielzahl von Anzeigeelementen (AE1, AE2) und Bedienfunktionen (BF) ausführt, über welches das Feldgerät (FG) bedient wird;
- Initiieren eines Suchlaufs nach in der Umgebung befindlichen und dem Bediengerät (BG1) bekannten weiteren Bediengeräten über die erste Kommunikationsschnittstelle (KS1) oder eine zweite Kommunikationsschnittstelle (KS2);
- Im Falle, dass zumindest ein weiteres Bediengerät (BG2), welches dem Bediengerät (BG1) bekannt ist, gefunden wurde, Aufbauen einer drahtlosen Kommunikationsverbindung zwischen dem Bediengerät (BG1) und dem weiteren Bediengerät (BG2) über die erste Kommunikationsschnittstelle (KS1), bzw. die zweite Kommunikationsschnittstelle (KS2), wobei auf dem weiteren Bediengerät (BG2) ein weiteres Bedienprogramm abläuft;
- Übergeben von zumindest einem Teil der Anzeigeelemente (AE1, AE2) und/oder Bedienfunktionen (BF) auf das weitere Bedienprogramm des weiteren Bediengeräts (BG2); und
- Bedienen des Feldgeräts (FG) mittels des weiteren Bediengeräts (BG2) über die dem weiteren Bedienprogramm übergebenen Anzeigeelemente (AE1, AE2), beziehungsweise Bedienfunktionen (BF),
**dadurch gekennzeichnet, dass** in dem Falle, dass zumindest ein dem Bediengerät (BG1) nicht bekanntes weiteres Bediengerät (BG2) gefunden wird, von dem Bediengerät (BG1) eine Eignungsprüfung des weiteren Bediengeräts (BG2) durchgeführt wird, wobei bei der Eignungsprüfung der Typ des weiteren Bediengeräts (BG2) sowie das auf dem weiteren Bediengerät (BG2) ablaufende Bedienprogramm festgestellt werden und wenn sie zu dem Bediengerät (BG1) bzw. zu dem Bedienprogramm kompatibel sind, geprüft wird, welche der Anzeigeelemente (AE1, AE2), bzw. der Bedienfunktionen (BF) auf das weitere Bediengerät (BG2) übertragen werden können.

2. Verfahren nach Anspruch 1, wobei für die drahtlose Kommunikationsverbindung zwischen dem Bediengerät (BG1) und dem Feldgerät (FG) und/oder zwischen dem Bediengerät (BG1) und dem weiteren Bediengerät (BG2) und/oder für den Suchlauf ein Bluetooth LE-Protokoll oder ein WiFi-Protokoll verwendet wird.

3. Verfahren nach Anspruch 1 oder Anspruch 2, wobei in dem Falle, dass zwei oder mehr weitere Bediengeräte (BG2), welche dem Bediengerät (BG1) bekannt sind, gefunden wurden, der Benutzer eine Auswahl über ein oder mehrere für die anschließenden Verfahrensschritte zu verwendenden weiteren Bediengeräte (BG2) mittels des Bediengeräts (BG1) getroffen wird.

4. Verfahren nach zumindest einem der vorherigen Ansprüche, wobei als Bediengerät (BG1) und als weiteres Bediengerät (BG2) jeweils ein mobiles Endgerät verwendet werden, wobei das Bediengerät (BG1) und das weitere Bediengerät (BG2) jeweils einen Touchscreen aufweisen.

5. Verfahren nach Anspruch 4, wobei mittels des Touchscreens des ersten Bediengeräts (BG1) ein oder mehrere Anzeigeelemente (AE1, AE2) visualisiert werden, wobei mittels des Touchscreens des weiteren Bediengeräts (BG2) ein oder mehrere übergebene Anzeigeelemente (AE1, AE2), insbesondere Messwertverläufe des Feldgeräts (FG), Menüelemente, und/oder Schaltflächen, visualisiert werden.

6. Verfahren nach Anspruch 4 oder 5, wobei mittels des Touchscreens des weiteren Bediengeräts (BG2) ein oder mehrere übergebene Bedienfunktionen (BF), insbesondere das Auswählen von auf dem Touchscreen visualisierten Menüelementen und/oder Schaltflächen, ausgeführt werden.

7. Verfahren nach zumindest einem der Ansprüche 1 bis 3, wobei als Bediengerät (BG1) eine Datenbrille verwendet wird und wobei als weiteres Bediengerät (BG2) ein mechanisches Eingabeelement, insbesondere mit zumindest einem Beschleunigungssensor, bspw. ein Datenhandschuh, ein Gamepad oder ein berührungs-/bewegungssensitives Kleidungsstück, verwendet wird.

8. Verfahren nach Anspruch 7, wobei als weiteres Bediengerät (BG2) ein Datenhandschuh verwendet wird, wobei mittels der Datenbrille ein oder mehrere Anzeigeelemente (AE1, AE2) visualisiert werden und wobei mittels des Datenhandschuhs zumindest eine übergebene Bedienfunktion ausgeführt wird,

9. Verfahren nach Anspruch 8, wobei als übergebene Bedienfunktion (BF) eine Navigation durch auf der Datenbrille visualisierte Anzeigeelemente (AE1, AE2) verwendet wird.

## Claims

1. Method for extending the operating functionality of a field device (FG) of the automation technology from one operating device (BG1) to at least one other Control unit (BG2), comprising
- Establishing a wireless communication link between the operating device (BG1) and the field device (FG) via a first communication interface (KS1) of the operating device (BG1), wherein the Operating device (BG1) at least one operating program with a large number of display elements (AE1, AE2) and operating functions (BF), via which the field device (FG) is operated;
- Initiate a search for objects in the surrounding area and the control unit (BG1) via the first control unit (BG1). communication interface (KS1) or a second Communication interface (KS2);
- In the event that at least one further operating device (BG2), which is assigned to the operating device (BG1) has been found, setting up a wireless Communication connection between the operating device (BG1) and the additional operating device (BG2) via the first communication interface (KS1), or the second communication interface (KS2), whereby on the another operating device (BG2) runs another operating program;
- Transfer of at least one part of the display elements (AE1, AE2) and/or operating functions (BF) to the other operating program of the additional operating device (BG2); and
- Operating the field device (FG) using the additional operating device (BG2) via the display elements transferred to the other operating program (AE1, AE2) or operating functions (BF),
wherein, in the event that at least one further operating device (BG2) not known to the operating device (BG1) is found, the operating device (BG1) sends a Suitability test of the additional operating device (BG2) is carried out, whereby the suitability test checks which of the display elements (AE1, AE2) or the operating functions (BF) can be transferred to the additional operating device (BG2).

2. Method according to claim 1, wherein for the wireless communication link between the operating device (BG1) and the field device (FG) and/or between the operating device (BG1) and the further operating device (BG2) and/or for the search run a Bluetooth LE protocol or a WiFi protocol is used.

3. Method according to claim 1 or claim 2, wherein in the event that two or more further operating devices (BG2) known to the operating device (BG1) have been found, the user is given a choice of one or more operating devices (BG2) suitable for the operating device (BG1).
The control unit (BG1) is used to make the selection of the further control units (BG2) to be used in the subsequent process steps.

4. Method according to at least one of the preceding claims, wherein a mobile terminal device is used as operating device (BG1) and as further operating device (BG2) in each case
the operating device (BG1) and the other operating device (BG2) each having a touchscreen.

5. Method according to claim 4, wherein one or more display elements (AE1, AE2) are visualized by means of the touch screen of the first operating device (BG1).
whereby one or more transferred display elements (AE1, AE2), in particular measured value curves of the field device (FG), menu elements and/or buttons, are visualized by means of the touchscreen of the additional operating device (BG2).

6. Method according to claim 4 or 5, wherein by means of the touch screen of the further The operating device (BG2) is used to execute one or more transferred operating functions (BF), in particular the selection of menu elements and/or buttons visualized on the touchscreen.

7. Method according to at least one of claims 1 to 3, wherein the operating device is (BG1) is used and wherein a mechanical input element, in particular with at least one acceleration sensor, e.g. a data glove, a gamepad or a touch/motion-sensitive item of clothing, is used as a further operating device (BG2).

8. Method according to claim 7, wherein a data glove is used as a further operating device (BG2), wherein one or more display elements (AE1, AE2) are visualized by means of the data goggles and wherein one or more display elements (AE1, AE2) are visualized by means of the data glove.
data glove at least one transferred operating function,

9. Method according to claim 8, wherein navigation by means of display elements (AE1, AE2) visualized on the data goggles is used as the transferred operating function (BF).

## Revendications

1. Procédé d'extension de la fonctionnalité de commande d'un appareil de terrain (FG) du technique d'automatisation d'un appareil de commande (BG1) à au moins un autre Appareil de commande (BG2), comprenant
- Établir une liaison de communication sans fil entre le
l'appareil de commande (BG1) et l'appareil de terrain (FG) par l'intermédiaire d'une première
interface de communication (KS1) de l'appareil de commande (BG1), le appareil de commande (BG1) au moins un programme de commande avec une multitude de
éléments d'affichage (AE1, AE2) et des fonctions de commande (BF), par le biais de commande l'appareil de terrain (FG) ;
- lancer une recherche des personnes se trouvant dans les environs et de l'utilisateur.
d'autres appareils de commande connus de l'appareil de commande (BG1) par le biais du premier
interface de communication (KS1) ou une deuxième
Interface de communication (KS2) ;
- Dans le cas où au moins un autre appareil de commande (BG2), qui est affecté au
de commande (BG1), l'établissement d'une liaison sans fil entre le dispositif de commande (BG1) et l'appareil de commande (BG2).
Liaison de communication entre l'appareil de commande (BG1) et le
autre appareil de commande (BG2) via la première interface de communication
(KS1), respectivement la deuxième interface de communication (KS2), où sur le
un autre programme de commande est exécuté sur un autre appareil de commande (BG2)
- transfert d'au moins une partie des éléments d'affichage (AE1, AE2) et/ou des fonctions de commande (BF) sur l'autre programme de commande du d'un autre appareil de commande (BG2) ; et
- Commande de l'appareil de terrain (FG) au moyen de l'autre appareil de commande (BG2) via
les éléments d'affichage transmis au programme de commande supplémentaire (AE1, AE2), respectivement des fonctions de commande (BF),
dans lequel, dans le cas où au moins un autre appareil de commande (BG2) non connu de l'appareil de commande (BG1) est trouvé, l'appareil de commande (BG1) envoie un message de confirmation à l'appareil de commande (BG2).
on effectue un test d'aptitude de l'autre appareil de commande (BG2), le test d'aptitude permettant de vérifier lesquels des éléments d'affichage (AE1, AE2) ou des fonctions de commande (BF) peuvent être transmis à l'autre appareil de commande (BG2).

2. Procédé selon la revendication 1, dans lequel, pour la liaison de communication sans fil entre l'appareil de commande (BG1) et l'appareil de terrain (FG) et/ou entre l'appareil de commande (BG1) et l'autre appareil de commande (BG2) et/ou pour le cycle de recherche un protocole Bluetooth LE ou un protocole WiFi utilisé.

3. Procédé selon la revendication 1 ou la revendication 2, dans lequel, dans le cas où deux ou plusieurs autres dispositifs de commande (BG2) connus du dispositif de commande (BG1) ont été trouvés, l'utilisateur peut faire un choix parmi un ou plusieurs dispositifs de commande (BG2) disponibles pour le dispositif de commande (BG1).
(BG2) est prise au moyen de l'appareil de commande (BG1).

4. Procédé selon au moins l'une des revendications précédentes, dans lequel un terminal mobile est utilisé comme appareil de commande (BG1) et comme autre appareil de commande (BG2). l'appareil de commande (BG1) et l'autre appareil de commande (BG2) présentant chacun un écran tactile.

5. Procédé selon la revendication 4, dans lequel un ou plusieurs éléments d'affichage (AE1, AE2) sont visualisés au moyen de l'écran tactile du premier appareil de commande (BG1). un ou plusieurs éléments d'affichage (AE1, AE2) transmis, en particulier des courbes de valeurs de mesure de l'appareil de terrain (FG), des éléments de menu et/ou des boutons, étant visualisés au moyen de l'écran tactile de l'autre appareil de commande (BG2).

6. Procédé selon la revendication 4 ou 5, dans lequel, au moyen de l'écran tactile de l'autre (BG2), une ou plusieurs fonctions de commande (BF) transmises, notamment la sélection d'éléments de menu et/ou de boutons visualisés sur l'écran tactile, sont exécutées.

7. Procédé selon au moins l'une des revendications 1 à 3, dans lequel on utilise comme appareil de commande
(8G1), on utilise des lunettes de données et, comme autre appareil de commande (BG2), on utilise un élément d'entrée mécanique, en particulier avec au moins un capteur d'accélération, par exemple un gant de données, une manette de jeu ou un vêtement sensible au toucher/au mouvement.

8. Procédé selon la revendication 7, dans lequel un gant de données est utilisé comme autre appareil de commande (BG2), dans lequel un ou plusieurs éléments d'affichage (AE1, AE2) sont visualisés au moyen des lunettes de données et dans lequel, au moyen du de données, au moins une fonction de commande transmise est exécutée,

9. Procédé selon la revendication 8, dans lequel on utilise comme fonction de commande transmise (BF) une navigation par des éléments d'affichage (AE1, AE2) visualisés sur les lunettes de données.
